Europäisches Patentamt

European Patent Office

Office européen des brevets

(11) Numéro de publication : **0 289 429 B1**

# FASCICULE DE BREVET EUROPEEN

(45) Date de publication du fascicule du brevet :
**11.12.91 Bulletin 91/50**

(51) Int. Cl.⁵ : **H02B 1/20, H02G 3/00**

(21) Numéro de dépôt : **88401047.1**

(22) Date de dépôt : **28.04.88**

(54) **Ensemble d'éléments de boîtiers pour la réalisation de faisceaux de câblage.**

(30) Priorité : **29.04.87 FR 8706101**

(43) Date de publication de la demande :
**02.11.88 Bulletin 88/44**

(45) Mention de la délivrance du brevet :
**11.12.91 Bulletin 91/50**

(84) Etats contractants désignés :
**DE ES GB IT NL SE**

(56) Documents cités :
**EP-A- 0 161 984**
**EP-A- 0 185 896**
**DE-A- 2 318 288**

(73) Titulaire : **Société anonyme dite: LABINAL**
**5, Avenue Newton**
**F-78190 Montigny le Bretonneux (FR)**

(72) Inventeur : **Moly, José**
**Chemin du Barray**
**F-31150 Gratentour (FR)**

(74) Mandataire : **Faber, Jean-Paul**
**CABINET FABER 35, rue de Berne**
**F-75008 Paris (FR)**

## Description

La présente invention concerne la réalisation de faisceaux de câblage.

Dans la technique du câblage, généralement on réalise des faisceaux de conducteurs dont les extrémités reçoivent des organes de connexion mâles ou femelles, qui sont, après sertissage logés dans des éléments de boîtiers.

De tels faisceaux ainsi préparés, sont ensuite posés sur la machine à équiper et les organes de connexion avec leurs éléments de boîtiers sont fixés à des organes correspondants.

La préparation des faisceaux est longue, coûteuses et nécessite un personnel qualifié. De plus, on peut difficilement réaliser une robotisation pour la mise en place des organes de connexion dans les éléments de boîtiers et la pose desdits éléments sur la machine à équiper.

L'un des buts de la présente invention est de remédier à ces divers inconvénients.

Le dispositif, selon l'invention, est destiné à la réalisation d'un faisceau de câblage comprenant une série de conducteurs pourvus à leurs extrémités d'organes de connexion mâle ou femelle destinés à s'insérer dans des canaux des éléments de boîtiers et est caractérisé en ce qu'il comprend plusieurs éléments de boîtiers reliés entre eux par une ossature.

De préférence, l'ossature comporte des amorces de rupture pour faciliter sa séparation des éléments de boîtiers. Ainsi, lorsque les différents éléments de boîtiers sont garnis avec les organes de connexion mâles ou femelles, ils peuvent être détachés facilement pour le montage sur la machine à équiper.

Afin de faciliter la mécanisation du montage des organes de connexion dans les canaux des éléments de boîtiers, ces derniers sont tous tournés dans le même sens de manière que les ouvertures des canaux destinées à l'introduction des organes de connexion soient toutes tournées du même côté.

L'ossature peut comporter des éléments complémentaires tels que gouttières, étiquettes, tubes, etc...

La gouttière peut être munie d'un dispositif de retenue pour des conducteurs.

L'ossature peut également comporter au moins un élément de repérage pour un robot.

L'ossature peut encore comporter un organe de fixation pour des conducteurs à une paroi.

L'invention va maintenant être décrite avec plus de détails en se référant à un mode de réalisation particulier donné à titre d'exemple seulement et représenté aux dessins annexés, dans lesquels :

Figure 1 est une vue en perspective d'un dispositif, selon l'invention.

Figure 2 est une vue montrant le dispositif avec le faisceau de câblage.

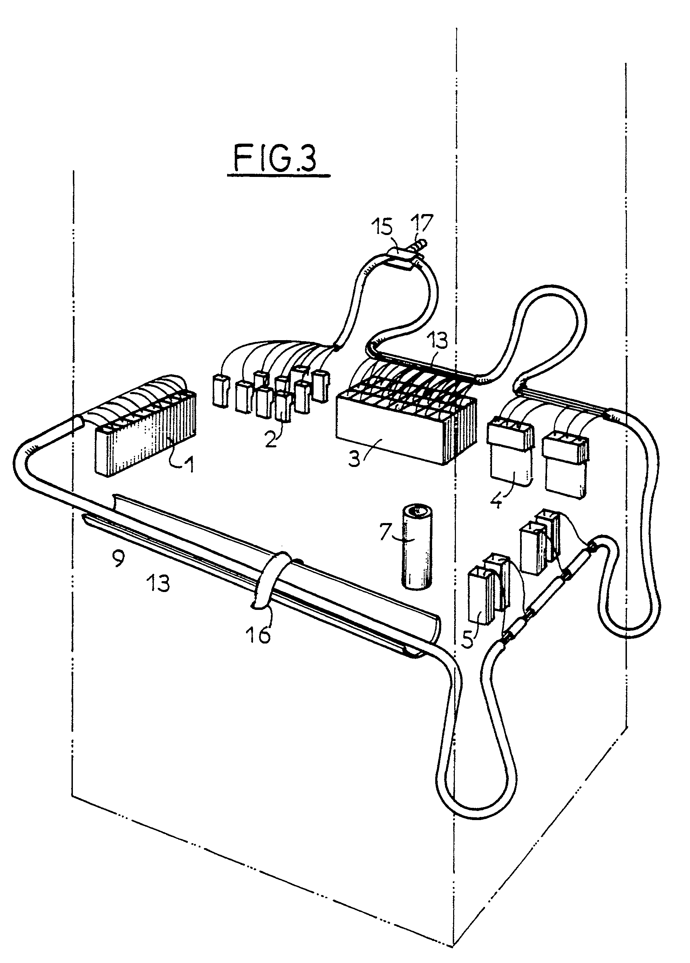

Figure 3 montre schématiquement un faisceau de câblage posé sur une machine.

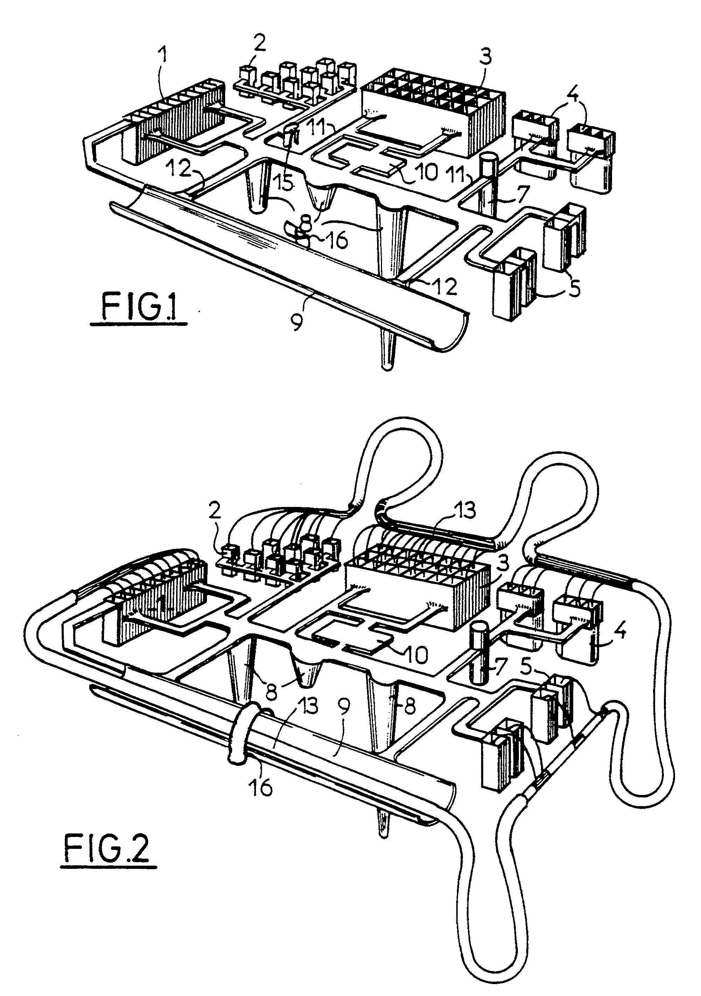

A la figure 1, on a représenté un dispositif désigné par la référence générale 1 et qui comprend un premier élément de boîtiers 1 destiné à recevoir des organes de connexion mâles ou femelles, des éléments de boîtiers unitaires 2, un élément de boîtiers 3 à trois séries de voies parallèles, deux éléments de boîtiers 4 à trois voies et deux éléments de boîtiers à deux voies 5. Cet ensemble est complété par une gouttière 9, une étiquette 10, un élément tubulaire 7 et trois queues 8. Il est encore prévu un organe 15 pour la fixation d'un faisceau de conducteurs à une paroi.

La gouttière 9 est pourvue d'un dispositif 16 de retenue des conducteurs qui est moulé avec l'ensemble en position ouvert et qui peut être rabattu et verrouillé pour la fixation desdits conducteurs.

Tous les éléments sont moulés simultanément et reliés par une ossature 11 venue également de moulage.

Chaque élément de boîtiers comporte un ou plusieurs canaux avec une ou plusieurs ouvertures à une extrémité destinées à permettre l'introduction d'un ou plusieurs organes de connexion mâles ou femelles et toutes les ouvertures d'introduction des organes de connexion mâles ou femelles sont toutes tournées du même côté. Les autres extrémités des éléments de boîtiers sont destinées à être assemblées avec des éléments de boîtiers complémentaires comportant des organes de connexion mâles ou femelles correspondants. Les organes de connexion femelles des éléments de boîtiers peuvent également être engagés sur des languettes mâles prévues sur des moteurs ou autres, les éléments de boîtiers correspondants constituant des isolants pour lesdites languettes.

Le dispositif représenté à la figure 1 peut facilement être saisi par un robot qui peut, grâce aux queues 8 repérer la position et ledit robot permettant de garnir automatiquement les différents éléments de boîtiers avec les organes de connexion pour réaliser un ensemble de câblage comme représenté à la figure 2, les conducteurs 13 ayant été préparés à l'avance et garnis des organes de connexion. Lorsque les conducteurs 13 sont placés dans la gouttière 9, le dispositif de retenue 16 est rabattu et verrouillé sur ladite gouttière 9.

L'organe 15 comporte un téton 17 destiné à être engagé dans un trou d'une paroi et un corps avec une ouverture étranglée afin de maintenir les conducteurs 13.

L'ensemble de câblage est destiné à équiper une machine, par exemple une machine d'électro-ménager, un véhicule, etc... et pour le montage l'ossature 11 est découpée, chaque élément de boîtiers 1, 2, 3, 4 et 5 étant monté à l'emplacement convenable.

On peut imaginer que l'ossature 11 comporte, au voisinage de chaque élément de boîtiers, de la gouttière etc... une amorce de rupture 12 pour faciliter sa séparation desdits éléments.

Bien entendu, l'invention n'est pas limitée au mode de réalisation qui vient d'être décrit et représenté. On pourra y apporter de nombreuses modifications de détail sans sortir pour cela du cadre de l'invention tel que défini par les revendications qui suivent.

## Revendications

1. Dispositif de réalisation d'un faisceau de câblage comprenant une série de conducteurs pourvus à leurs extrémités d'organes de connexion mâles ou femelles destinés à s'insérer dans des canaux des éléments de boîtiers caractérisé en ce qu'il comprend plusieurs éléments de boîtiers (1, 2, 3, 4, 5) reliés entre eux par une ossature (11).

2. Dispositif, selon la revendication 1, caractérisé en ce que l'ossature (11) comporte des amorces de rupture pour faciliter sa séparation des éléments de boîtiers (1, 2, 3, 4, 5).

3. Dispositif, selon la revendication 1, caractérisé en ce que les éléments de boîtiers sont tous tournés dans le même sens de manière que les ouvertures des canaux destinées à l'introduction des organes de connexion soient toutes tournées du même côté.

4. Dispositif, selon la revendication 1, caractérisé en ce que l'ossature (11) comporte au moins une gouttière (9).

5. Dispositif, selon la revendication 4, caractérisé en ce que la gouttière (9) comporte un dispositif de retenue (16) pour des conducteurs.

6. Dispositif, selon la revendication 1, caractérisé en ce que l'ossature (11) comporte au moins une étiquette (10).

7. Dispositif, selon la revendication 1, caractérisé en ce que l'ossature (11) comporte au moins un élément tubulaire (7).

8. Dispositif, selon la revendication 1, caractérisé en ce que l'ossature (11) comporte au moins un élément de repérage (8) pour un robot.

9. Dispositif, selon la revendication 1, caractérisé en ce que l'ossature (11) comporte au moins un organe (15) pour la fixation de conducteurs à une paroi.

## Patentansprüche

1. Einrichtung zur Gestaltung eines Kabelbaumes, der eine Reihe von Leitern aufweist, die an ihren Enden mit stiftartigen oder steckbuchsenartigen Verbindungsorganen versehen sind, die dazu bestimmt sind, in Kanäle von Gehäuseelementen eingesetzt zu werden, dadurch gekennzeichnet, daß sie mehrere Gehäuseelemente (1, 2, 3, 4, 5) aufweist, die untereinander durch ein Tragwerk (11) verbunden sind.

2. Einrichtung nach Anspruch 1, dadurch gekennzeichnet, daß das Tragwerk (11) Sollbruchstellen aufweist, um das Abtrennen der Gehäuseelemente (1, 2, 3, 4, 5) zu erleichtern.

3. Einrichtung nach Anspruch 1, dadurch gekennzeichnet, daß sämtliche Gehäuseelemente gleichsinnig lageorientiert sind, dergestalt, daß die Öffnungen der für das Einführen der Verbindungsorgane bestimmten Kanäle sämtliche derselben Seite zugewandt sind.

4. Einrichtung nach Anspruch 1, dadurch gekennzeichnet, daß das Tragwerk (11) mindestens eine Führungsrinne (9) aufweist.

5. Einrichtung nach Anspruch 4, dadurch gekennzeichnet, daß die Führungsrinne (9) eine Haltevorrichtung (16) für Leiter aufweist.

6. Einrichtung nach Anspruch 1, dadurch gekennzeichnet, daß das Tragwerk (11) zumindest ein Etikett (10) aufweist.

7. Einrichtung nach Anspruch 1, dadurch gekennzeichnet, daß das Tragwerk (11) zumindest ein rohrförmiges Element (7) aufweist.

8. Einrichtung nach Anspruch 1, dadurch gekennzeichnet, daß das Tragwerk (11) zumindest ein Ausrichtelement (8) für einen Roboter aufweist.

9. Einrichtung nach Anspruch 1, dadurch gekennzeichnet, daß das Tragwerk (11) zumindest ein Organ (15) für die Befestigung der Leiter an einer Wand aufweist.

## Claims

1. A device for creating a wiring loom comprising a series of conductors provided at their ends with male or female connector members intended for being inserted in channels in case elements, characterized in that it comprises a number of case elements (1, 2, 3, 4, 5) connected together by a skeleton (11).

2. A device as in Claim 1, characterized in that the skeleton (11) includes fracture regions for facilitating its separation from the case elements (1, 2, 3, 4, 5).

3. A device as in Claim 1, characterized in that the case elements are all turned in the same direction so that the openings of the channels intended for the introduction of the connector members are all turned to the same side.

4. A device as in Claim 1, characterized in that the skeleton (11) includes at least one trough (9).

5. A device as in Claim 4, characterized in that the trough (9) includes a retainer device (16) for the conductors.

6. A device as in Claim 1, characterized in that the skeleton (11) includes at least one label (10).

7. A device as in Claim 1, characterized in that the skeleton (11) includes at least one tubular element (7).

8. A device as in Claim 1, characterized in that the skeleton (11) includes at least one locator element (8) for a robot.

9. A device as in Claim 1, characterized in that the skeleton (11) includes at least one member (15) for attachment of the conductors to a wall.

FIG.1

FIG.2

# FIG.3